# EUROPÄISCHE PATENTSCHRIFT

(11) **EP 2 929 970 B1**
(45) Veröffentlichungstag und Bekanntmachung des Hinweises auf die Patenterteilung: **06.11.2019**
(21) Anmeldenummer: 15000866.2
(22) Anmeldetag: 24.03.2015
(51) Int. Cl.: B23F 23/00, B23F 5/04, B23F 5/22, B23F 15/08

(54) **VERFAHREN ZUM SCHLEIFEN EINES WERKSTÜCKS MIT EINER SCHLEIFSCHNECKE**
METHOD FOR GRINDING OF A WORKPIECE WITH A GRINDING WORM
PROCÉDÉ D'USINAGE D'UNE PIÈCE À USINER D'UNE ROULETTE DE DRESSAGE

(30) Priorität: 09.04.2014 DE 102014005274
(43) Veröffentlichungstag der Anmeldung: 14.10.2015
(73) Patentinhaber: Kapp Werkzeugmaschinen GmbH, 96450 Coburg (DE); NILES Werkzeugmaschinen GmbH, 12681 Berlin (DE)
(72) Erfinder: Grinko, Sergiy, 96450 Coburg (DE)
(74) Vertreter: Gosdin, Michael

(56) Entgegenhaltungen:
- EP-B1- 1 600 236
- WO-A2-2007/139708
- JP-A- H10 286 720
- US-A- 4 329 096

## Beschreibung

Die Erfindung betrifft ein Verfahren zum Schleifen eines Werkstücks mit einer Schleifschnecke, wobei das Werkstück eine Achse aufweist und über seinen Umfang mit einer Profilierung versehen ist, wobei die Schleifschnecke eine Achse aufweist und mit einer Bearbeitungsfläche versehen ist, wobei bei vorliegendem Eingriff der Bearbeitungsfläche in die Profilierung bei gleichzeitigem synchronisierten Drehen des Werkstücks um seine Achse und der Schleifschnecke um ihre Achse ein Schleifvorgang der Profilierung durchgeführt wird, indem die Schleifschnecke in Richtung der Achse des Werkstücks bewegt wird, und wobei während des Schleifvorgangs der Schleifschnecke eine Verschiebebewegung in Richtung der Achse der Schleifschnecke überlagert wird.

Beim Hartfeinbearbeiten insbesondere von Zahnrädern ist das Schleifen mit einer Schleifschnecke im Stand der Technik wohl bekannt. Hierzu wird exemplarisch auf die EP 1 987 919 A2 hingewiesen, wo eine Schleifschnecke zum genannten Zweck beschrieben wird. Dabei erfolgt ein kontinuierlicher Schleifvorgang (im Unterschied zum diskontinuierlichen Schleifen der einzelnen Zahnlücken des zu schleifenden Zahnrads), wobei die Schleifschnecke mit dem zu schleifenden Zahnrad kämmt und Zahnrad und Schleifschnecke in zueinander korrelierender Weise bei entsprechender Zustellung drehen.

Dabei kann beim Wälzschleifen einer Verzahnungen bzw. eines Profils vorgesehen werden, dass die Schleifschnecke in ihrer axialen Richtung während der Bearbeitung (d. h. während die Schnecke in axialer Richtung des Zahnrads mit entsprechender Zustellung entlanggeführt wird) versetzt wird (sog. "Shiften"), um zu erreichen, den Verschleiß der Schleifschnecke zu kompensieren. Das elektronische Getriebe der Schleifmaschine, das die genaue synchrone Drehung zwischen Schleifschnecke und Werkzeug sicherstellt, gewährleistet dabei die Wälzkopplung unter Berücksichtigung der vorgesehenen und programmierten Shiftbewegung.

Bei der Bearbeitung wird für jedes Werkstück ein definierter Schneckenbereich der Schleifschnecke vorgesehen. Daraus ergibt sich die Anzahl der zu schleifenden Teile zwischen zwei Abrichtvorgängen. In der Regel wird der genannte Shiftbetrag so berechnet, dass alle Teile zwischen zwei Abrichtvorgängen (d. h. die Teile pro Abrichten) der geforderten Qualität entsprechen und dabei eine maximal mögliche Produktivität erreicht wird.

Beim Schleifen ohne das genannte Shiften bzw. beim Shiften mit geringen Shiftbeträgen bildet sich auf der Flankenoberfläche der Zähne des Zahnrads eine regelmäßige Struktur aus, wobei die Schleifspuren über die gesamte Werkstückbreite parallel zueinander verlaufen. Eine solche Struktur beeinflusst das Geräuschverhalten beim Abwälzen der Zahnradpaarungen im Getriebe negativ. Um das Geräuschverhalten zu verbessern, sind Verfahren entwickelt worden, die die Oberflächenstruktur modifizieren, so dass die parallel laufenden Schleifspuren unterbrochen sind oder gar nicht mehr existieren. Die Oberflächenstruktur charakterisiert sich dann durch die versetzte Anordnung der Schleifspuren in Profilrichtung.

In der EP 1 600 236 B1 wird ein anderer Weg hierzu beschritten, bei dem die Bewegung des Werkstücks über die Zahnbreite ungleichförmig gewählt wird.

Die WO 2007/139708 A2 beschreibt eine Lösung, bei der durch Shiften unterschiedliche axiale Bereiche einer Schleifschnecke zum Einsatz gebracht werden, um verschleißbedingte Änderungen des Durchmessers der Schleifschnecke auszugleichen. Auch die JP H06 15527 A setzt eine Shiftbewegung einer Schleifescheibe ein, um die Standzeit des Schleifenwerkzeugs optimal auszunutzen.

Alle vorbekannten Maßnahmen sind entweder aufwändig oder bringen nicht immer den gewünschten Effekt.

Die US 4 329 096 A offenbart eine Maschine und ein Bearbeitungsverfahren zum Wälzfräsen eines Zahnrads. Zum Ausgleich von Verschleiß ist vorgesehen, dass die Werkzeugspindel, die den Wälzfräser trägt, in Achsrichtung geschiftet wird.

Die JP H10 286720 A offenbart ein Verfahren zum Fräsen eines Schraubenverdichters.

Der Erfindung liegt daher die **Aufgabe** zugrunde, ein gattungsgemäßes Verfahren zum Schleifen eines Werkstücks mit einer Schleifschnecke so weiterzuentwickeln, dass ein besseres Ergebnis erzielt wird. Demgemäß soll im Betrieb des Werkstücks ein verbessertes Geräuschverhalten erreicht werden.

Die **Lösung** dieser Aufgabe durch die Erfindung ist dadurch gekennzeichnet, dass die Verschiebebewegung aus mindestens einem ersten Abschnitt besteht, bei dem die Schleifschnecke in die eine Richtung ihrer Achse bewegt wird, und aus mindestens einem zweiten, sich anschließenden Abschnitt besteht, bei dem die Schleifschnecke in die andere Richtung ihrer Achse bewegt wird, wobei die Verschiebebewegungen innerhalb der ersten und zweiten Abschnitte lineare oder sinusförmige Verläufe der Bewegung in Richtung der Achse der Schleifschnecke über dem Verlauf der Achse des Werkstücks sind.

Die Verschiebebewegung besteht nach einer Ausgestaltung der Erfindung dabei aus einem einzigen ersten Abschnitt, bei dem die Schleifschnecke in die eine Richtung ihrer Achse bewegt wird, und aus einem einzigen zweiten Abschnitt, bei dem die Schleifschnecke in die andere Richtung ihrer Achse bewegt wird.

Eine andere Ausgestaltung der Erfindung sieht vor, dass die Verschiebebewegung zunächst aus einem ersten Abschnitt besteht, bei dem die Schleifschnecke in die eine Richtung ihrer Achse bewegt wird, und aus einem sich hieran anschließenden zweiten Abschnitt besteht, bei dem die Schleifschnecke in die andere Richtung ihrer Achse bewegt wird, wobei sich hieran mindestens ein weiterer erster Abschnitt anschließt, bei dem die Schleifschnecke in die eine Richtung ihrer Achse bewegt wird, und mindestens ein sich hieran anschließender weiterer zweiter Abschnitt, bei dem die Schleifschnecke in die andere Richtung ihrer Achse bewegt wird.

Demgemäß kann vorgesehen werden, dass mehr als zwei dieser Bereiche, jeweils bestehend aus der Bewegung die Schleifschnecke erst in die eine und dann in die andere Richtung, aufeinander folgen, beispielsweise sechs oder acht Abschnitte.

Es kann auch vorgesehen werden, dass die Anzahl der Teilabschnitte ungeradzahlig ist, also beispielsweise drei, fünf oder sieben Teilabschnitte aufeinander folgen.

Die Länge der einzelnen (Teil)Abschnitte ist zumeist gleich; allerdings kann auch vorgesehen werden, dass die Länge der Abschnitte ungleich ist.

Auch andere funktionale Verläufe sind möglich, beispielsweise Rampenverläufe oder eine Kombination verschiedener Verlaufsformen.

Die Positionen der Schleifschnecke entlang ihrer Achse sind bevorzugt beim Beginn des Bearbeitungsvorgangs im einen axialen Endbereich des Werkstücks und beim Ende des Bearbeitungsvorgangs im anderen axialen Endbereich des Werkstücks gleich.

Das Werkstück ist bevorzugt ein Zahnrad und die Profilierung sind dann Zähne des Zahnrades. Dabei handelt es sich bevorzugt um ein außenverzahntes Zahnrad.

Das Werkstück kann aber auch ein anderes Profil aufweisen, es kann beispielsweise ein Rotor mit einer Außenprofilierung sein.

Die vorgeschlagene Vorgehensweise erlaubt es, die Oberflächenstruktur auf der Zahnflanke (im Falle eines Zahnrads) in effizienter und dennoch einfacher Weise durch einen speziellen Shiftvorgang zu modifizieren und damit das Geräuschverhalten des Zahnrads im späteren Betrieb zu verbessern.

Zusätzlich wird die Produktivität beim Schleifen mit geräuschreduzierendem Shiften wesentlich erhöht.

Mit dem vorgeschlagenen Vorgehen kann in einfacher Weise ein Shiften des Schleifwerkzeugs durchgeführt und hiermit eine positive Beeinflussung der Flankenoberfläche erreicht werden.

Das vorgeschlagene Verfahren stellt eine vorteilhafte Finish-Bearbeitung von Verzahnungen und ähnlichen Profilen dar.

Demgemäß zeichnet sich nach der Erfindung die Finish-Bearbeitung von Verzahnungen und ähnlichen Profilen dadurch aus, dass beim Wälzschleifen die Schleifschnecke mit einem bestimmten Betrag in axialer Richtung verschoben (also "geshiftet") wird, so dass die Schleifspuren auf der Zahnflankenoberfläche nicht mehr durchgehend sind.

Dabei wird die Bewegungsrichtung des Shiftens einmalig oder mehrmalig geändert. Somit entstehen auf der Zahnflanke Bereiche, die Strukturen unterschiedlicher Richtung aufweisen.

Die genannte Richtungsänderung (Umkehr der Shiftbewegung) kann in regelmäßigen, aber auch in unregelmäßigen Abständen über der Breite des Werkstücks erfolgen, was auch die Bereichsgröße sowie die Struktur der Bereiche entsprechend beeinflusst.

Die Shift- und Vorschubgeschwindigkeit können in diesen Shiftbereichen konstant oder variabel gehalten werden.

Die Umkehrung der Shiftbewegung während der Bearbeitung hat auch eine Verkürzung der gesamten Shiftbewegung pro Hub zur Folge. Dies beeinflusst positiv die Anzahl der Teile pro Abrichten bzw. es bedeutet eine Erhöhung der Produktivität. Somit werden die Abrichtzeiten pro Teil und folglich die anteiligen Werkzeugkosten pro Teil vorteilhaft gesenkt.

In den Zeichnungen ist ein Ausführungsbeispiel der Erfindung dargestellt. Es zeigen:
- Fig. 1: in perspektivischer Darstellung einen Teil eines Zahnrads, das in Eingriff mit einer Schleifschnecke steht, um die Verzahnung des Zahnrads hartfeinzubearbeiten,
- Fig. 2: den Verlauf einer Shift-Verschiebebewegung, die der Schleifschnecke beim Schleifen des Zahnrads überlagert wird, als Funktion der Vorschubbewegung der Schleifschnecke über die Breite des Zahnrads gemäß einer ersten Ausführungsform der Erfindung (unterhalb des Funktionsverlaufs ist die Lage des zu schleifenden Zahnrades skizziert) und
- Fig. 3: in der Darstellung nach Fig. 2 eine alternative Ausführungsform der Erfindung.

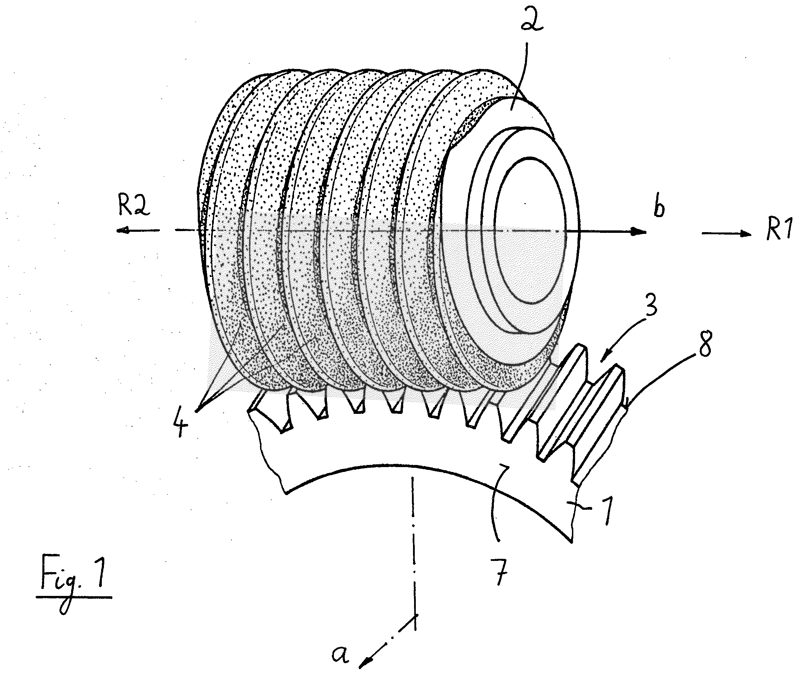

In Fig. 1 ist ein Werkstück 1 in Form eines Zahnrades zu sehen, das eine Profilierung 3 in Form einer Verzahnung aufweist. Um diese Verzahnung 3 zu schleifen, also hartfeinzubearbeiten, ist ein schneckenförmiges Bearbeitungswerkzeug 2 in Form einer Schleifschnecke vorhanden. Das Werkzeug 2 weist eine Bearbeitungsfläche 4 auf.

Beim Schleifen rotiert das Zahnrad 1 um seine Achse a und das Werkzeug 2 um seine Achse b. Um das Zahnrad 1 und namentlich die Verzahnung 3 über die gesamte Zahnbreite vom einen axialen Endbereich 7 bis zum anderen axialen Endbereich 8 zu bearbeiten, wird während des Eingriffs des Werkzeugs 2 in das Werkstück 1 nicht nur die Rotation um die jeweiligen Achsen ausgeführt, sondern es erfolgt eine Relativbewegung zwischen Werkstück 1 und Werkzeug 2 in Richtung der Achse a.

Bei konventionellen Shiften - zwecks Ausgleichs des Verschleißes des Werkzeugs 2 - kann so vorgegangen werden, dass die Schleifschnecke 2 während eines Hubes (Bewegung zwischen den beiden axialen Endbereichen 7, 8 des Zahnrads 1 bzw. der Verzahnung 3) nur in eine Richtung (z. B. in die Richtung R1, s. Fig. 1) geshiftet wird.

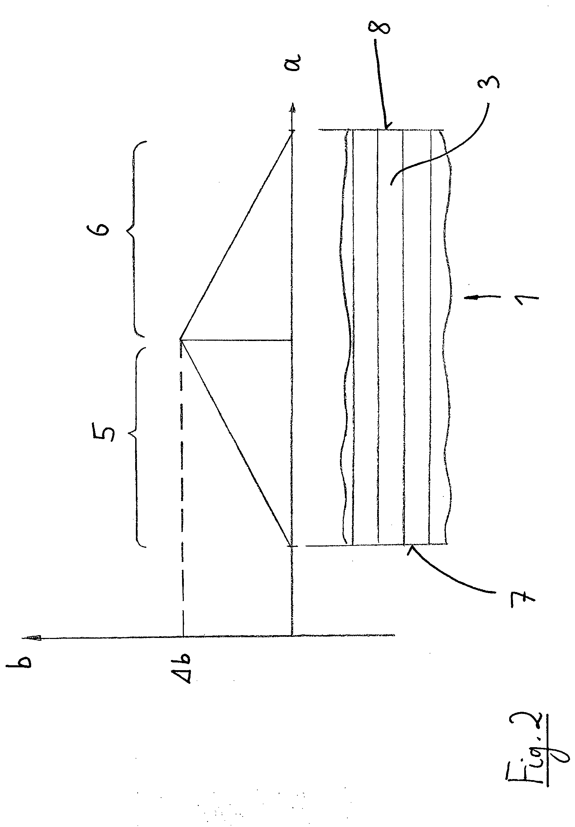

Das vorgeschlagene Verfahren sieht indes eine andere Vorgehensweise vor: Hier erfolgt zwar auch eine Shiftbewegung in Richtung der Achse b des Werkzeugs 2, allerdings kommt es jetzt über der Verzahnungsbreite zu einer Richtungsumkehr. Allgemein gesprochen besteht die Verschiebebewegung aus mindestens einem ersten Abschnitt 5, bei dem das Bearbeitungswerkzeug 2 in die eine Richtung R1 seiner Achse b bewegt wird, und aus mindestens einem zweiten Abschnitt 6 besteht, bei dem das Bearbeitungswerkzeug 2 in die andere Richtung R2 seiner Achse b bewegt wird. Dies ist in Fig. 2 illustriert.

In diesem Ausführungsbeispiel kann gesehen werden, dass die Schleifschnecke vom Anfang des Hubes (startend im axialen Endbereich 7 des Werkstücks 1) bis zur Mitte des Hubes in die eine Richtung (R1, s. Fig. 1) geshiftet wird. Ab der Mitte des Hubes und bis zum Ende des Hubes (endend im axialen Endbereich 8 des Werkstücks 1) erfolgt dann ein Shiften in die Gegenrichtung R2 (s. Fig. 1), so dass der gesamte Shiftbetrag halbiert wird.

In diesem Ausführungsbeispiel ist dabei ein linearer Verlauf der Shiftbewegung vorgesehen (s. den rampenförmigen Verlauf der Funktion in Fig. 2). Allerdings können natürlich auch andere Funktionsverläufe vorgesehen werden.

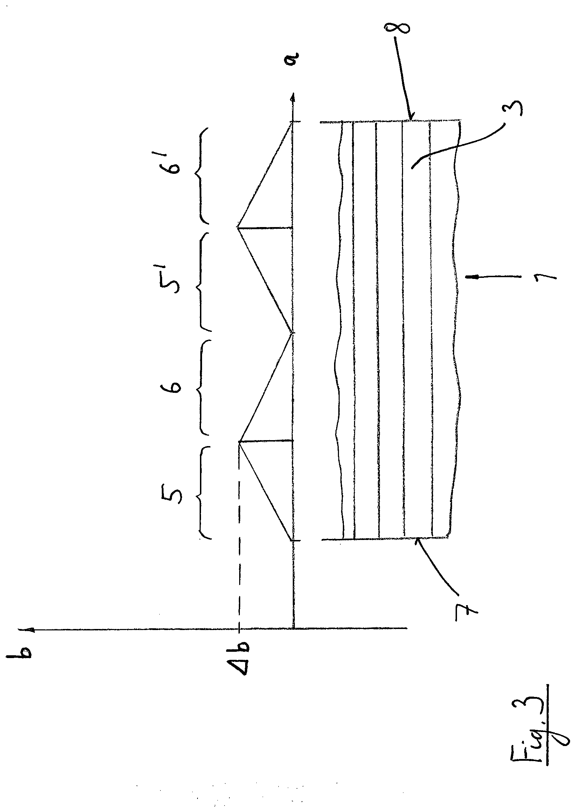

Eine Verfeinerung dieses Prinzips ist in Fig. 3 dargestellt. Hier ist vorgesehen, dass die Schleifschnecke 2 vom Anfang des Hubes bis zum Viertel des Hubes in die eine Richtung R1 (erster Abschnitt 5) und dann vom Viertel des Hubes bis zur Mitte des Hubes in die Gegenrichtung R2 geshiftet wird (zweiter Abschnitt 6); danach wird die Schnecke von der Mitte des Hubes bis zu Drei-Viertel des Hubes wieder in die erste Richtung R1 (erster Abschnitt 5') und vom Drei-Viertel des Hubes bis zum Ende des Hubes wieder in die Gegenrichtung R2 geshiftet (zweiter Abschnitt 6').

Es entsteht in diesem Falle die Doppel-Rampen-Funktion, wie in Fig. 3 zu sehen. Natürlich können auch hier wieder andere Funktionsverläufe vorgesehen werden.

Der maximale Shiftbetrag, der in den beiden Ausführungsbeispielen nach den Figuren 2 und 3 vorgesehen ist, ist mit Δb angegeben.

### Bezugszeichenliste:

- 1: Werkstück (Zahnrad)
- 2: schneckenförmiges Bearbeitungswerkzeug
- 3: Profilierung (Verzahnung)
- 4: Bearbeitungsfläche
- 5: erster Abschnitt
- 5': erster Abschnitt
- 6: zweiter Abschnitt
- 6': zweiter Abschnitt
- 7: axialer Endbereich des Werkstücks
- 8: axialer Endbereich des Werkstücks

- a: Achse des Werkstücks
- b: Achse des Bearbeitungswerkzeugs
- Δb: maximaler Shiftbetrag

- R1: erste Richtung der Achse des Bearbeitungswerkzeug
- R2: zweite Richtung der Achse des Bearbeitungswerkzeug

## Patentansprüche

1. Verfahren zum Schleifen eines Werkstücks (1) mit einer Schleifschnecke (2),
wobei das Werkstück (1) eine Achse (a) aufweist und über seinen Umfang mit einer Profilierung (3) versehen ist,
wobei die Schleifschnecke (2) eine Achse (b) aufweist und mit einer Bearbeitungsfläche (4) versehen ist,
wobei bei vorliegendem Eingriff der Bearbeitungsfläche (4) in die Profilierung (3) bei gleichzeitigem synchronisierten Drehen des Werkstücks (1) um seine Achse (a) und der Schleifschnecke (2) um ihre Achse (b) ein Schleifvorgang der Profilierung (3) durchgeführt wird, indem die Schleifschnecke (2) in Richtung der Achse (a) des Werkstücks (1) bewegt wird, und
wobei während des Schleifvorgangs der Schleifschnecke (2) eine Verschiebebewegung in Richtung der Achse (b) der Schleifschnecke (2) überlagert wird,
**dadurch gekennzeichnet, dass**
die Verschiebebewegung aus mindestens einem ersten Abschnitt (5) besteht, bei dem die Schleifschnecke (2) in die eine Richtung (R1) ihrer Achse (b) bewegt wird, und aus mindestens einem zweiten Abschnitt (6) besteht, bei dem die Schleifschnecke (2) in die andere Richtung (R2) ihrer Achse (b) bewegt wird, wobei die Verschiebebewegungen innerhalb der ersten und zweiten Abschnitte (5, 6, 5', 6') lineare oder sinusförmige Verläufe der Bewegung in Richtung der Achse (b) der Schleifschnecke (2) über dem Verlauf der Achse (a) des Werkstücks (1) sind.

2. Verfahren nach Anspruch 1, **dadurch gekennzeichnet, dass** die Verschiebebewegung aus einem einzigen ersten Abschnitt (5) besteht, bei dem die Schleifschnecke (2) in die eine Richtung (R1) ihrer Achse (b) bewegt wird, und aus einem einzigen zweiten Abschnitt (6) besteht, bei dem die Schleifschnecke (2) in die andere Richtung (R2) ihrer Achse (b) bewegt wird.

3. Verfahren nach Anspruch 1, **dadurch gekennzeichnet, dass** die Verschiebebewegung zunächst aus einem ersten Abschnitt (5) besteht, bei dem die Schleifschnecke (2) in die eine Richtung (R1) ihrer Achse (b) bewegt wird, und aus einem sich hieran anschließenden zweiten Abschnitt (6) besteht, bei dem die Schleifschnecke (2) in die andere Richtung (R2) ihrer Achse (b) bewegt wird, wobei sich hieran mindestens ein weiterer erster Abschnitt (5') anschließt, bei dem die Schleifschnecke (2) in die eine Richtung (R1) ihrer Achse (b) bewegt wird, und mindestens ein sich hieran anschließender weiterer zweiter Abschnitt (6'), bei dem die Schleifschnecke (2) in die andere Richtung (R2) ihrer Achse (b) bewegt wird.

4. Verfahren nach einem der Ansprüche 1 bis 3, **dadurch gekennzeichnet, dass** die Positionen der Schleifschnecke (2) entlang ihrer Achse (b) beim Beginn des Bearbeitungsvorgangs im einen axialen Endbereich (7) des Werkstücks (1) und beim Ende des Bearbeitungsvorgangs im anderen axialen Endbereich (8) des Werkstücks (1) gleich sind.

5. Verfahren nach einem der Ansprüche 1 bis 4, **dadurch gekennzeichnet, dass** das Werkstück (1) ein Zahnrad ist und die Profilierung (3) Zähne des Zahnrades sind.

6. Verfahren nach Anspruch 5, **dadurch gekennzeichnet, dass** das Zahnrad ein außenverzahntes Zahnrad ist.

7. Verfahren nach einem der Ansprüche 1 bis 4, **dadurch gekennzeichnet, dass** das Werkstück ein Rotor mit einer Außenprofilierung ist.

## Claims

1. Method for grinding of a workpiece (1) with a grinding worm (2),
wherein the workpiece (1) comprises an axis (a) and is supplied with a profiling (3) along its circumference,
wherein the grinding worm (2) comprises an axis (b) and is supplied with a machining surface (4),
wherein a grinding process of the profiling (3) is carried out at simultaneous synchronized rotation of the workpiece (1) around its axis (a) and of the grinding worm (2) around its axis (b) with given meshing of the machining surface (4) into the profiling (3) by moving the grinding worm (2) in the direction of the axis (a) of the workpiece (1) and
wherein a shift movement is superposed to the grinding worm (2) in the direction of the axis (b) of the grinding worm (2) during the grinding process,
**characterized in that**
the shift movement consists of at least one first section (5) at which the grinding worm (2) is moved in one of the directions (R1) of its axis (b) and consists of at least one second section (6) at which the grinding worm (2) is moved in the other of its directions (R2) of its axis (b), wherein within the first and second sections (5, 6, 5', 6') the shift movements are linear or sinusoidal runs of the movement in the direction of the axis (b) of the grinding worm (2) over the run of the axis (a) of the workpiece (1).

2. Method according to claim 1, **characterized in that** the shift movement consists of a single first section (5) at which the grinding worm (2) is moved in one of the directions (R1) of its axis (b) and that the shift movement consists of a single second section (6) at which the grinding worm (2) is moved in the other of the directions (R2) of its axis (b).

3. Method according to claim 1, **characterized in that** the shift movement consists at first of a first section (5) at which the grinding worm (2) is moved in one of the directions (R1) of its axis (b) and that the shift movement consists of a subsequent second section (6) at which the grinding worm (2) is moved in the other of the directions (R2) of its axis (b), wherein subsequently at least one further first section (5') follows at which the grinding worm (2) is moved in one of the directions (R1) of its axis (b) and at least one further second section (6') at which the grinding worm (2) is moved in the other of the directions (R2) of its axis (b).

4. Method according to one of claims 1 to 3, **characterized in that** the positions of the grinding worm (2) along its axis (b) are equal at the beginning of the machining process in one of the axial end regions (7) of the workpiece (1) and at the end of the machining process in the other axial end region (8) of the workpiece (1).

5. Method according to one of claims 1 to 4, **characterized in that** the workpiece (1) is a gear and that the profiling (3) is the toothing of the gear.

6. Method according to claim 5, **characterized in that** the gear is an exterior toothed gear.

7. Method according to one of claims 1 to 4, **characterized in that** the workpiece (1) is a rotor with an exterior profiling.

## Revendications

1. Procédé de meulage d'une pièce (1) comportant une vis de meulage (2), la pièce (1) comportant un axe (a) et étant pourvue d'un profilé (3) sur sa périphérie, la vis de meulage (2) comportant un axe (b) et étant pourvue d'une surface d'usinage (4), un processus de meulage du profilé (3) étant effectué, pendant l'engagement en cours de la surface d'usinage (4) dans le profilé (3) et en même temps pendant la rotation synchronisée de la pièce (1) sur son axe (a) et de la vis de meulage (2) sur son axe (b), par déplacement de la vis de meulage (2) dans la direction de l'axe (a) de la pièce (1), et un mouvement de coulissement dans la direction de l'axe (b) de la vis de meulage (2) est superposé pendant le processus de meulage de la vis de meulage (2),
**caractérisé en ce que**
le mouvement de coulissement comprend au moins une première partie (5) dans laquelle la vis de meulage (2) est déplacée dans une direction (R1) de son axe (b) et au moins une deuxième partie (6) dans laquelle la vis de meulage (2) est déplacée dans l'autre direction (R2) de son axe (b), les mouvements de coulissement à l'intérieur des première et deuxième parties (5, 6, 5', 6') sont des variations linéaires ou sinusoïdales du mouvement dans la direction de l'axe (b) de la vis de meulage (2) sur l'extension de l'axe (a) de la pièce (1).

2. Procédé selon la revendication 1, **caractérisé en ce que** le mouvement de coulissement comprend une seule première partie (5) dans laquelle la vis de meulage (2) est déplacée dans une direction (R1) de son axe (b) et une seule deuxième partie (6) dans laquelle la vis de meulage (2) est déplacée dans l'autre direction (R2) de son axe (b).

3. Procédé selon la revendication 1, **caractérisé en ce que** le mouvement de coulissement comprend tout d'abord une première partie (5) dans laquelle la vis de meulage (2) est déplacée dans une direction (R1) de son axe (b), une deuxième partie (6), faisant suite à la première, dans laquelle la vis de meulage (2) est déplacée dans l'autre direction (R2) de son axe (b), au moins une autre première partie (5'), dans laquelle la vis de meulage (2) est déplacée dans la première direction (R1) de son axe (b), faisant suite à la deuxième partie et au moins une autre deuxième partie (6'), dans laquelle la vis de meulage (2) est déplacée dans l'autre direction (R2) de son axe (b), faisant suite à cette autre première partie.

4. Procédé selon l'une des revendications 1 à 3,
**caractérisé en ce que** la position de la vis de meulage (2) le long de son axe (b) au début du processus d'usinage dans une région d'extrémité axiale (7) de la pièce (1) et la position de la vis de meulage à la fin du processus d'usinage dans l'autre région d'extrémité axiale (8) de la pièce (1) sont identiques.

5. Procédé selon l'une des revendications 1 à 4,
**caractérisé en ce que** la pièce (1) est une roue dentée et le profilé (3) consiste en des dents de la roue dentée.

6. Procédé selon la revendication 5, **caractérisé en ce que** la roue dentée est une roue dentée à denture extérieure.

7. Procédé selon l'une des revendications 1 à 4,
**caractérisé en ce que** la pièce est un rotor à profilé extérieur.
